# EUROPÄISCHE PATENTSCHRIFT

(11) **EP 2 177 756 B1**
(45) Veröffentlichungstag und Bekanntmachung des Hinweises auf die Patenterteilung: **14.05.2014**
(21) Anmeldenummer: 09158973.9
(22) Anmeldetag: 28.04.2009
(51) Int. Cl.: F03D 11/00

(54) **Windkraftanlage mit Zentralschmierung**
Wind energy assembly with central lubrication
Eolienne dotée d'une lubrification centrale

(30) Priorität: 28.02.2008 DE 202008002849 U
(43) Veröffentlichungstag der Anmeldung: 21.04.2010
(73) Patentinhaber: Baier & Köppel GmbH & Co., 91257 Pegnitz (DE)
(72) Erfinder: Köppel, Bernhard, 91257 Pegnitz (DE)
(74) Vertreter: Zech, Stefan Markus

(56) Entgegenhaltungen:
- WO-A1-03/019004
- WO-A1-03/031812
- WO-A1-03/078870
- WO-A2-2008/065088
- DE-U1-202005 015 774

## Beschreibung

Die vorliegende Erfindung betrifft eine Schmieranlage zum Schmieren einer oder mehrerer Schmierstellen in einer Windkraftanlage, umfassend: wenigstens ein Schmiermittelreservoir, wenigstens eine Schmiermittelfördereinrichtung, wenigstens eine Schmiermittelzuführung, welche Schmierstoff an wenigstens eine Schmierstelle führt, wobei Schmierstoff aus dem wenigstens einen Schmiermittelreservoir durch die wenigstens eine Schmiermittelfördereinrichtung über die mit der wenigstens einen Schmiermittelfördereinrichtung verbundene wenigstens eine Schmiermittelzuführung an die wenigstens eine Schmierstelle gefördert wird. Solche Schmieranlagen sind beispielsweise aus der DE 202005015774 U1 bekannt.

Windkraftanlagen, insbesondere deren mechanischen Bestandteile zur Kraftübertragung, sind mitunter extremen mechanischen Belastungen während des Betriebes unterworfen. Durch den Umstand, dass Windkraftanlagen typischerweise an relativ unzugänglichen Territorien aufgestellt sind, wird jedoch eine regelmäßige Wartung der Windkraftanlagen unter ökonomischen Gesichtspunkten oft in relativ langen Wartungsintervallen durchgeführt. Gerade in bergigem Gelände oder im Off-Shore-Einsatz können derartige Wartungsintervalle einige Monate betragen. Während dieser Wartungsintervalle muss dennoch die Funktionstüchtigkeit aller Bestandteile der Windkraftanlage, insbesondere die der mechanischen Bestandteile zur Kraftübertragung, gewährleistet sein.

Die stärksten mechanischen Belastungen einer Windkraftanlage erfahren die drehbaren Lager der Windkraftanlage, insbesondere das Hauptlager, das Generatorlager, oder das Azimutlager, welche zum Erhalt der Funktionstätigkeit in ausreichendem Maße mit Schmierstoff versorgt werden müssen, um folglich Defekte und lange Ausfallzeiten aufgrund von Mangelschmierung zu vermeiden. Darüber hinaus sind auch die entsprechenden Antriebe mit Schmierstoff zu versorgen.

Da die verschiedenen Bereiche einer Windkraftanlage, wie Rotor, Gondel und Mast gegeneinander drehbar sind, war es bislang notwendig, für jeden dieser Bereiche ein eigenes Schmierkonzept zu erstellen und mit entsprechendem Aufwand zu warten.

Insbesondere stellt sich bei Schmieranlagen zum Schmieren einer oder mehrerer Schmierstellen in einer Windkraftanlage die Problematik, dass auch die Pitcheinstellvorrichtungen der Rotorenblätter einer regelmäßigen Versorgung mit Schmiermittel bedürfen. Mittels der Pitcheinstellvorrichtungen, welche typischerweise ein Pitchlager und wenigstens einen Pitchantrieb umfassen, werden die Anstellwinkel der Rotorenblätter entsprechend der vorherrschenden Windverhältnisse eingestellt. Eine Versorgung der Pitcheinstellvorrichtungen des Rotors, welcher sich bei Betrieb der Windkraftanlage sowohl gegenüber dem Bezugssystem der Gondel als auch dem Bezugssystem des Mastes dreht, ließ es dem Stand der Technik bisher nötig erscheinen, eine separate Schmieranlage, umfassend Schmiermittelreservoir, Schmiermittelfördereinrichtung sowie Schmiermittelzuführungen, in dem Rotor der Windkraftanlage vorzusehen, welche während des Betriebes der Windkraftanlage im Bezugssystems des Rotors mitrotiert. Zur Behebung von Defekten bzw. zur regelmäßigen Wartung der Schmieranlage zur Schmierung der Pitcheinstellvorrichtungen mussten die Windkraftanlagen deswegen bisher in mitunter langen Ausfallperioden zum Stillstand gebracht werden, um den Rotor ohne Gefahr für das Wartungspersonal zugänglich zu machen.

Die Aufgabe der vorliegenden Erfindung besteht somit darin, eine Schmieranlage zum Schmieren einer oder mehrerer Schmierstellen in einer Windkraftanlage umfassend wenigstens ein Schmiermittelreservoir, wenigstens eine Schmiermittelfördereinrichtung, wenigstens eine Schmiermittelzuführung, welche Schmierstoff an wenigstens eine Schmierstoffstelle führt, vorzuschlagen, wobei Schmierstoff aus dem wenigstens einem Schmiermittelreservoir durch die wenigstens eine Schmiermittelfördereinrichtung über die mit der wenigstens einen Schmiermittelfördereinrichtung verbundene wenigstens eine Schmiermittelzuführung an die wenigstens eine Schmierstelle gefördert wird, wobei eine wesentlich einfachere und wartungsfreundlichere Schmierung der gesamten Windanlage ermöglicht wird.

Diese Aufgabe wird mit einer Schmieranlage zum Schmieren einer oder mehrerer Schmierstellen in einer Windkraftanlage nach den Merkmalen des Schutzanspruches 1 gelöst.

Danach umfasst die Schmieranlage zum Schmieren einer oder mehrerer Schmierstellen in einer Windkraftanlage: wenigstens ein Schmiermittelreservoir, wenigstens eine Schmiermittelfördereinrichtung, wenigstens eine Schmiermittelzuführung, welche Schmierstoff an wenigstens eine Schmierstelle führt, wobei Schmierstoff aus dem wenigstens einem Schmiermittelreservoir durch die wenigstens eine Schmiermittelfördereinrichtung über die mit der wenigstens einen Schmiermittelfördereinrichtung verbundene wenigstens eine Schmiermittelzuführung an die wenigstens eine Schmierstelle gefördert wird, wobei sich die Schmieranlage dadurch auszeichnet, dass die wenigstens eine Schmierstelle in einem gegenüber einem ersten Bezugssystem der Schmiermittelfördereinrichtung im Betrieb der Windkraftanlage drehenden zweiten Bezugssystem angeordnet ist, und dass die von der Schmiermittelfördereinrichtung an die Schmierstelle führende Schmiermittelzuführung eine Drehdurchführung umfasst.

Vorteilhafte Weiterbildungen dieser Schmieranlage sind in den jeweiligen Unteransprüchen aufgeführt.

Ein wesentlicher Kerngedanke der vorliegenden Erfindung besteht darin, dass die wenigstens eine Schmierstelle in einem gegenüber einem ersten Bezugssystem der Schmiermittelfördereinrichtung im Betrieb der Windkraftanlage drehenden zweiten Bezugssystems angeordnet ist, und dass die von der Schmiermittelfördereinrichtung an die Schmierstelle führende Schmiermittelzuführung eine Drehdurchführung umfasst. Das Vorsehen einer Drehdurchführung in einer Schmiermittelzuführung erlaubt folglich die fluiddichte Verbindung zweier sich gegeneinander drehender Bezugssysteme, so dass die von der Schmiermittelzuführung ebenfalls umfassten Schmiermittelleitungen in beiden Bezugssystemen aufgrund der relativen Drehung keinen Schaden erfahren. Mittels der in der Schmiermittelzuführung umfassten Drehdurchführung können somit bequem aus einem ersten Teilbereich der Windkraftanlage, z. B. aus dem Mast, über die Schmiermittelzuführung Schmiermittel in einen zweiten Teilbereich der Windkraftanlage, z. B. eine gegenüber dem Mast drehbar gelagerte Gondel, befördert werden. Durch das Vorsehen einer weiteren Drehdurchführung in der Rotorwelle der Windkraftanlage, kann Schmiermittel an die Pitcheinstellvorrichtungen des Rotors geliefert werden, ohne dass das Schiermittelreservoir bzw. die Schmiermittelfördereinrichtung im Rotor der Windkraftanlage vorgesehen sein muss. Dies erlaubt eine Wartung von Schiermittelreservoir bzw. die Schmiermittelfördereinrichtung, ohne notwendigerweise den Betrieb der Windkraftanlage zu unterbrechen.

Hierbei ist anzumerken, dass das wenigstens eine Schmierstelle umfassende zweite Bezugssystem gegenüber dem ersten Bezugssystem der Schmiermittelfördereinrichtung im Betrieb der Windkraftanlage drehend ist, jedoch mit dem ersten Bezugssystem keine gemeinsame mechanische Drehachse, etwa in der Form einer Welle, aufweisen muss. Eine Drehung mit gemeinsamer mechanischer Drehachse kann beispielsweise um das Azimutlager der Windkraftanlage erfolgen, wodurch Gondel und Mast relativ zueinander um die gemeinsame Drehachse am oberen Ende des Mastes vorgesehene des Azimutlager gedreht werden. Ebenso weisen die Gondel und der Rotor der Windkraftanlage bei Betrieb eine gemeinsame mechanische Drehachse, nämlich die die Rotorwelle, auf. Im Sinne der vorliegenden Erfindung wird jedoch auch die Drehung des Rotors in Bezug auf das Bezugssystem des Mastes auch dann als Drehung betrachtet, wenn auch die Gondel gegenüber dem Mast gedreht wird. Eine Kombination von Drehungen ist folglich als eine einheitliche Drehung wie im mathematischen Sinne aufzufassen.

In einer ersten vorteilhaften Ausgestaltung der Schmieranlage ist vorgesehen, dass das Schmiermittelreservoir im gleichen ersten Bezugssystem wie die Schmiermittelfördereinrichtung angeordnet ist, also sich während des Betriebs der Windkraftanlage nicht relativ zur Schmiermittelfördereinrichtung dreht. Diese Vorkehrung trägt dem Umstand Rechnung, dass in marktüblichen Schmiermittelpumpen das Schmiermittelreservoir sowie die Schmiermittelfördereinrichtung als Einheit vertrieben werden. Hierbei sind beispielsweise elektrische Kolbenpumpen aufzuführen, welche über einen elektrisch betriebenen Exzenterantrieb einen in einem Pumpenelement angeordneten Kolben betätigen, welcher aus dem Schmiermittelreservoir Schmiermittel an die Schmiermittelzuführung fördert. Weiterhin können zur Versorgung von Schmierstellen in Windkraftanlagen auch Pneumatikpumpen Einsatz finden, welche einen mit Druckluft betriebenen Kolben umfassen, der bei Beaufschlagung Schmiermittel aus dem Schmiermittelreservoir in die Schmiermittelzuführung leitet. Die Druckluft zum Betrieb der Pneumatikpumpe kann aus einer Druckluftquelle zugeführt werden, welche typischerweise einen Kompressor mit entsprechendem Druckluftspeicher umfasst. In einem ebenfalls in der Schmiermittelfördereinrichtung beinhalteten Mischverteiler kann unter Druck eine Zerkleinerung des Schmierstoffes in winzige Tröpfchen - 0,15 mm und auch kleiner - erfolgen, worauf das Schmiermittel-Luftgemisch (Öl-Luftgemisch, Luft-Ölgemisch, Luft-Fettgemisch, Fett-Luftgemisch) an die zu schmierende Schmierstelle weiter befördert wird. Aufgrund der engen funktionellen Verbindung von Schmiermittelreservoir und Schmiermittelfördereinrichtung in den Schmiermittelpumpen erscheint es folglich zweckmäßig, das Schmiermittelreservoir zusammen mit der Schmiermittelfördereinrichtung in deren erstem Bezugssystem der Windkraftanlage anzuordnen.

In einer weiteren vorteilhaften Ausgestaltung der Schmieranlage kann auch vorgesehen sein, dass das Schmiermittelreservoir und/oder die Schmiermittelfördereinrichtung im Fußbereich der Windkraftanlage gegenüber einem Fundament der Windkraftanlage feststehend angeordnet sind/ist und eine Schmiermittelzuführung vorgesehen ist, die mittels einer Drehdurchführung Schmierstoff an eine oder mehrere Schmierstellen eines Azimutlagers und/oder eines Azimutantriebs der Windkraftanlage führt. Die Wartung von Schmiermittelreservoir und/oder Schmiermittelfördereinrichtung wird demzufolge merklich erleichtert, da das Wartungspersonal diese Bestandteile der Schmieranlage über einen vom Boden erreichbaren Zustieg in den Mast auf dessen Fußhöhe erreichen können. Die Drehdurchführung, welche erlaubt, Schmierstoff an eine oder mehrere Schmierstellen des Azimutlagers und/oder des Azimutantriebs zu befördern, bildet in diesem Falle die drehunabhängige Verbindung zwischen dem Mast und der Gondel der Windkraftanlage. Sie erlaubt ebenso die Zuführung von Schmierstoff aus dem Fußbereich des Mastes zu in der Gondel der Windkraftanlage angeordneten Schmierstellen.

Nach einem ebenso vorteilhaften Aspekt der Schmieranlage ist vorgesehen, dass das Schmiermittelreservoir und/oder die Schmiermittelfördereinrichtung in einem Mast und/oder in einer Gondel der Windkraftanlage angeordnet sind/ist und wenigstens eine Schmiermittelzuführung vorgesehen ist, die Schmierstoff an eine oder mehrere Schmierstellen eines Azimutlagers der Windkraftanlage führt. Entsprechend dieser Ausführungsform ist wiederum gewährleistet, dass Wartungsarbeiten vom Wartungspersonal relativ bequem im Mastbereich der Windkraftanlage und/oder der Gondel vorgenommen werden können. Ein Abschalten der gesamten Windkraftanlage kann dementsprechend unterbleiben, wodurch die wirtschaftliche Ausfallperiode folglich minimiert wird. Ist das Schmiermittelreservoir und/oder die Schmiermittelfördereinrichtung im Inneren des Mastes angebracht, so erscheint für eine Förderung von Schmierstoff zu den Schmierstellen des Azimutlagers und/oder auch eines Azimutantriebs der Windkraftanlage eine Drehdurchführung in dem drehbaren Azimutlager zweckmäßig, da ansonsten - bei üblichen Baufirmen - der Schmierstoff gegen die Schwerkraft aufgebracht werden müsste. Ist hingegen das Schmiermittelreservoir und/oder die Schmiermittelfördereinrichtung in der Gondel der Windkraftanlage vorgesehen, so sind in der Schmiermittelzuführung von der Schmiermittelfördereinrichtung zur Schmierstelle - bei üblichen Baufirmen und Ausnutzung der Schwerkraft - keine Drehdurchführungen notwendig.

In einem weiteren vorteilhaften Aspekt der vorliegenden Erfindung kann vorgesehen sein, dass wenigstens eine Schmierstelle als Pitchschmierstelle zur Schmierung einer Pitcheinstellvorrichtung der Windkraftanlage ausgebildet ist. Eine Pitcheinstellvorrichtung, welche typischerweise aus wenigstens einem Pitchantrieb sowie einer Pitchlagerung besteht, dient zur Regelung des Anstellwinkels der Rotorenblätter der Windkraftanlage. Durch einen entsprechend der Windverhältnisse vorteilhaft gewählten Anstellwinkel der Rotorblätter kann das auf den Rotor wirkende Drehmoment optimiert werden. Dies führt zu einer optimalen Energieausbeute der Windkraftanlage. Sollte sich das Schmiermittelreservoir und/oder die Schmiermittelfördereinrichtung in der Gondel der Windkraftanlage befinden, so kann in einer möglichen Ausführungsform die Zuführung von Schmiermittel an die Schmierstellen der Pitcheinstellvorrichtung mittels einer Drehdurchführung in der Rotorwelle des Rotors der Windkraftanlage erfolgen. Dementsprechend kann die Rotorwelle einen oder mehrere Kanäle für die Schmiermittelweiterleitung aufweisen, welche mit entsprechenden Kanälen der Drehdurchführung fluiddicht verbunden sind, so dass eine Zuführung von Schmiermittel von der Drehdurchführung durch die Kanäle in der Rotorwelle an die Schmierstellen der Pitcheinstellvorrichtungen erfolgen kann.

In einer bevorzugten Ausführungsform der vorliegenden Schmieranlage kann vorgesehen sein, dass innerhalb der Pitcheinstellvorrichtung Pitchschmierstellen zur Schmierung eines Pitchantriebes und/oder einer Pitchlagerung ausgebildet sind. Dementsprechend kann vorgesehen sein, dass entweder als Schmierstellen ausgebildete Bereiche des Pitchantriebes mit Schmiermittel versorgt werden, oder dass lediglich vorbestimmte Bereiche der Pitchlagerung mit Schmiermittel versorgt werden, oder dass sowohl Pitchantrieb als auch Pitchlagerung geschmiert werden. Je nach Betriebsweise und Betriebsbedingungen der Windkraftanlage kann somit Schmiermittel an alle mechanisch beanspruchten Flächen bzw. Stellen der Pitcheinstellvorrichtung geführt werden. Eine Aufbringung von Schmiermittel an die Stellen, die einer Schmierung nicht bedürfen, kann unterbleiben, wodurch die Förderung von Schmiermitteln an Schmierstellen ökonomischer gestaltet wird.

In einer ebenso bevorzugten Ausführungsform der vorliegenden Schmieranlage kann vorgesehen sein, dass wenigstens eine Drehdurchführung einer Rotorwelle der Windkraftanlage vorgesehen ist, durch welche wenigstens ein Schmierstoff geführt wird. Durch Vorsehen einer Drehdurchführung an der Rotorwelle der Windkraftanlage kann bequem Schmiermittel aus dem Bereich der Gondel in den Rotor und folglich an alle in dem Rotor angeordneten Schmierstellen geliefert werden. Ein Vorsehen von Schmiermittelfördereinrichtung und Schmiermittelreservoir in dem Rotor selbst kann somit unterbleiben und die Beschickung der in dem Rotor angeordneten Pitcheinstellvorrichtungen mit Schmiermittel kann von einem in der Gondel oder in dem Mast vorgesehenen Ort erfolgen.

In einer wiederum besonders bevorzugten Ausführungsform der vorliegenden Schmieranlage ist vorgesehen, dass die wenigstens eine Drehdurchführung an der Rotorwelle endseitig vorgesehen ist. Die Verbindung von Rotorwelle und Drehdurchführung erfordert eine druck- und fluiddichte Verbindung, so dass Schmierstoff aus einer Schmiermittelzuführung durch die Rotorwelle der Windkraftanlage an die entsprechenden Schmierstellen, beispielsweise Pitchschmierstellen, geführt werden kann. Eine Verbindung von Drehdurchführung mit der Rotorwelle wird dementsprechend erleichtert, da ausführungsgemäß lediglich eine fluiddichte Verbindung zwischen Drehdurchführung und Rotorwelle erforderlich ist.

Alternativ kann ebenso vorgesehen sein, dass die wenigstens eine Drehdurchführung an einer beliebigen Stelle entlang der Längserstreckung der Rotorwelle in die Rotorwelle integriert vorgesehen ist. Obwohl diese Anordnung wenigstens zwei Verbindungsbereiche zwischen Drehdurchführung und jeweiligen Teilstücken der Rotorwelle erfordert, ermöglicht sie eine bequeme Platzierung der Drehdurchführung entlang der Längserstreckung der Rotorwelle, um so ein möglicherweise beschränktes Platz- bzw. Raumangebot in der Gondel zu umgehen. Zudem erlaubt eine derartige Anbringung der Drehdurchführung in der Rotorwelle der Windkraftanlage eine verbesserte Wartungsfähigkeit, da die Drehdurchführung an den Stellen in die Rotorwelle integriert werden kann, welche für das Wartungspersonal leicht erreichbar sind.

In einer weiter vorteilhaften Ausführungsform der Schmieranlage kann weiterhin vorgesehen sein, dass die wenigstens eine Drehdurchführung in der Rotorwelle korrosionsbeständiges Material aufweist. Folglich kann ein korrosionsbedingter Defekt der Drehdurchführung weitgehend vermieden werden und die Lebensdauer der korrosionsgefährdeten Bestandteile der Drehdurchführung wird deutlich erhöht.

Vorteilhafterweise kann die Schmieranlage sich auch dadurch auszeichnen, dass die wenigstens eine Drehdurchführung in der Rotorwelle gegen Überdruck des Schmierstoffs bis zu 300 bar dicht ist. Damit gewährleistet die Drehdurchführung auch Fluiddichtigkeit bei typischerweise in den Schmiermittelzuführungen einer Schmieranlage auftretenden Drücken. Handelsübliche Drehdurchführungen in der Fluidtechnik weisen jedoch eine deutlich geringere Dichtigkeit gegenüber Druck auf. Schmieranlagen, welche möglicherweise auch Schmierstoffe mit einem sehr hohen Feststoffanteil über sehr ausgedehnte Schmieranlagen zu verteilen haben, weisen jedoch einen Betriebsdruck von weit über dieser Maximalgrenze auf. Um dennoch eine fluiddichte Schmiermittelzuführung durch die Drehdurchführung gewährleisten zu können, sind hochfeste Dichtungen in der Drehdurchführung für Windkraftanlagen erforderlich.

In einer weiteren möglichen Ausführungsform der vorliegenden Erfindung ist vorgesehen, dass die wenigstens eine Drehdurchführung in der Rotorwelle wenigstens zwei getrennte Durchführungskanäle aufweist, so dass zwei unterschiedliche Schmiermittel zuführbar sind. Die wenigstens zwei voneinander getrennten Durchführungskanäle sind dabei so angeordnet, dass sie mit der Drehdurchführung fluiddicht verbunden werden können. Durch die Zuführung zweier unterschiedlicher Schmiermittel kann somit den unterschiedlichen Schmierbedingungen der Pitcheinstellvorrichtung in dem Rotor der Windkraftanlage Rechnung getragen werden. So können es beispielsweise die Betriebsbedingungen der Pitcheinstellvorrichtungen erforderlich machen, den Pitchantrieb mittels eines Luft-Öl-/Schmiermittelgemisches zu schmieren, jedoch die Pitchlagerung mittels eines Schmiermittels mit einem hohen Schmierfettgehalt zu schmieren.

In einer weiteren möglichen Ausführungsform der vorliegenden Erfindung ist die Schmieranlage zur Förderung wenigstens zweier unterschiedlicher Schmiermittel ausgebildet, wobei vorzugsweise ein Schmiermittel auf einem Schmierfett basiert und ein Schmiermittel auf einem Öl-Luftgemisch. Demgemäß kann unterschiedlichen Schmieranforderungen einzelner Schmierstellen Rechnung getragen werden, indem etwa ein auch hohen Belastungen gerecht werdendes und sehr fein verteilbares Öl-Luftgemisch auf schwerer von außen zugängliche Stellen, an denen hoher Flächendruck wirksam wird, aufgetragen wird, wohingegen etwa leichter zugängliche, unproblematischere Schmierstellen mit handelüblichen Schmierfett geschmiert werden können.

In einer weiterhin alternativen Ausführungsform der vorliegenden Erfindung kann vorgesehen sein, dass die wenigstens eine Schmiermittelfördereinrichtung eine elektrische Kolbenpumpe umfasst, welche die Förderung von Schmiermittel auf mechanische Weise aus dem wenigstens einen Schmiermittelreservoir in die wenigstens eine Schmiermittelzuführung bewirkt. Eine derartige elektrische Kolbenpumpe umfasst typischerweise einen Folgekolben, welcher durch einen Exzenterantrieb der Pumpe beaufschlagt wird und aus dem Schmiermittelreservoir Schmiermittel in die Schmiermittelzuführung fördert. Das Schmiermittelreservoir der elektrischen Kolbenpumpe kann zudem auch einen in dem Schmiermittelreservoir vorgesehenen Rührflügel umfassen, welcher das Schmiermittel dem Folgekolben gezielt zuführen kann. Die elektrische Kolbenpumpe kann zudem mit der zentralen Steuerung der Windkraftanlage verschaltet sein, so dass nach einer vorbestimmten Zyklenzahl der Rotorendrehung die Zuführung von Schmiermittel aus der elektrischen Kolbenpumpe veranlasst wird. Fernerhin ist es möglich, den Schmierstoffvorrat des Schmierstoffreservoirs der elektrischen Kolbenpumpe mittels eines Füllstandschalters zu überwachen.

In einer weiteren vorteilhaften Ausführungsform der Schmieranlage kann vorgesehen sein, dass die wenigstens eine Schmiermittelzuführung wenigstens einen Progressivverteiler umfasst. Durch die in dem Progressivverteiler vorgesehen Verteilerkolben kann durch entsprechende Dimensionierung der Kolbendurchmesser die Fördermenge des zu fördernden Schmiermittels an die Betriebsbedingungen bzw. den Erfordernissen der jeweils angeschlossenen Schmierstellen angepasst werden. Progressivverteiler weisen eine hydraulische Folgesteuerung auf. Hierbei werden die in dem Progressivverteiler vorgesehenen Kolben durch das zugeführte Schmiermittel derart gesteuert, dass der Schmierstoff reguliert aus den einzelnen Auslässen des Progressivverteilers austritt und in weitere mit dem Progressiv-Verteiler verbundene Schmiermittelzuführungen verteilt wird.

In einer wiederum vorteilhaften Ausführungsform der vorliegenden Schmieranlage kann vorgesehen sein, dass die wenigstens eine Schmiermittelfördereinrichtung eine Druckluftquelle aufweist, welche mit einer Pneumatikpumpe kommuniziert, die ihrerseits mit Druckluft vermischtes Schmiermittel an einen Mischverteiler befördert, in welchem die Zerstäubung des Schmiermittels mit Druckluft und die Beförderung des zerstäubten Schmiermittels an die wenigstens eine Schmiermittelzuführung erfolgt. Bei Betrieb dieser ausführungsgemäßen Schmiermittelfördereinrichtung wird typischerweise Druckluft aus einem Druckluftspeicher der Pneumatikpumpe zugeführt. Der Druckluftspeicher selbst wird normalerweise von einem Kompressor mit Druckluft versorgt. Das Schmiermittel aus der Pneumatikpumpe wird zusammen mit der Druckluft in einen Mischverteiler in winzige Tröpfchen - 0,15 mm und kleiner - zerkleinert und wird folglich als Luft-Ölgemisch über die Schmiermittelzuführungen zu den Schmierstellen befördert. Der Einsatz von Druckluft ermöglicht es, mechanische miteinander in Eingriff stehende Schmierstellen zu schmieren oder auch im Stillstand von Verzahnungen Schmierstoff zwischen etwa kämmende Zahnflanken zu bringen und damit den Verschleiß durch Mikrobewegungen (Stick-Slip) und Tribokorrosion wesentlich zu reduzieren. Ferner kann durch die Verwendung von sehr geringen Schmierstoffmengen jegliche Verschmutzung der Umgebung der Schmierstellen vermieden werden, wodurch Abstreif- oder Entsorgungsvorrichtungen nicht erforderlich sind.

In einer vorteilhaften Weiterführung der erfindungsgemäßen Schmieranlage kann auch vorgesehen sein, dass die wenigstens eine Schmiermittelzuführung wenigstens eine Sprühdüse aufweist, welche Schmiermittel gezielt auf die wenigstens eine Schmierstelle aufsprüht. Mittels der Sprühdüsen ist es möglich, den Schmierstoff, typischerweise ein Luft-Ölgemisch präzise auf die Schmierstellen, beispielsweise auf die Zahnkränze der Azimutlagerung bzw. der Pitchlagerung, aufzusprühen, wobei unter Vermeidung von Überschmierung auch mechanisch schwer erreichbare Schmierstellen mit einem die ganzen Schmierstellen bedeckenden Schmiermittelfilm versehen werden können.

Die Schmieranlage kann sich ausführungsgemäß auch dadurch auszeichnen, dass die wenigstens eine Sprühdüse in ihrem Sprühbild sowie in ihrem Sprühquerschnitt an die Geometrie der wenigstens einen Schmierstelle angepasst ist, so dass die wenigstens eine Schmierstelle nach dem Sprühvorgang von einem zusammenhängenden Sprühfilm bedeckt ist. Durch die Anpassung ihres Sprühbildes sowie ihres Sprühquerschnitts kann die Sprühdüse in ihrer Funktionalität den Voraussetzungen für eine vorteilhafte Schmiermittelauftragung angepasst werden. Ferner sind ein an eine Schmierstelle angepasstes Sprühbild bzw. Sprühquerschnitt zur gleichmäßigen Auftragung eines Öl-Luftgemisches geeignet, den Schmiervorgang unter optimaler Ausnutzung der Schmiermittelreserven auszuführen.

In einer weiterführenden Ausführungsform der vorliegenden Schmieranlage kann diese auch vorsehen, dass jeder der wenigstens einen Pitchantriebe der Pitcheinstellvorrichtung wenigstens einer Sprühdüse zugeordnet ist und mit dem wenigstens einen auf einem Öl-Luftgemisch basierenden Schmiermittel geschmiert wird und/oder jeder Pitchlagerung wenigstens eine Austrittsöffnung der Schmiermittelzuführung zugeordnet ist und mit dem wenigstens einen auf Schmierfett basierenden Schmiermittel geschmiert werden. Durch die Auftragung zweier unterschiedlicher Schmiermittel auf voneinander abweichende Schmierstellen wird folglich wiederum den unterschiedlichen Schmieranforderungen Rechnung getragen, welche sich etwa aus der Geometrie, der Erreichbarkeit der Schmierstellen, oder auch der mechanischen Beanspruchung der Schmierstellen ergeben.

Die Schmieranlage kann in einer weiteren Ausführungsform auch derart ausgestaltet sein, dass die Schmiermittelförderung auf Aufforderung erfolgt, wobei die Aufforderung durch Betätigung eines mit der wenigstens einen Schmiermittelfördereinrichtung in Wirkverbindung stehenden Aufforderungsmittels, insbesondere durch Betätigung eines Schalters, erfolgt, welches die Schmiermittelförderung durch die Schmiermittelfördereinrichtung veranlasst. Die Betätigung des Aufforderungsmittels erfolgt im einfachsten Falle manuell, insbesondere durch manuelle Betätigung eines mit der Schmiermittelfördereinrichtung in Wirkverbindung stehenden Schalters. Alternativ kann die Aufforderung auch durch ein elektronisches Steuersignal einer mit der Schmiermittelfördereinrichtung in Wirkverbindung stehenden Steuerung erfolgen, durch welche beispielsweise ein externes Signal in eine Aufforderung zur Schmiermittelförderung umgesetzt wird. Die Schmiermittelförderung auf Aufforderung stellt sich vorwiegend dann als vorteilhaft heraus, wenn für Wartungsarbeiten bzw. zur Behebung von technischen Problemen für Prüfzwecke Schmiermittel durch die Schmieranlage gefördert werden kann.

In einer weiterhin bevorzugten Ausführungsform der vorliegenden Erfindung kann vorgesehen sein, dass Schmierstoff über die wenigstens eine Schmiermittelzuführung an wenigstens eine weitere Schmierstelle einer Rotorhauptlagerung und/oder Generatorlagerung und/oder einer Getriebelagerung der Windkraftanlage gefördert wird. Folglich können alle wichtigen, der Schmierung bedürfenden Lagerungen der Windkraftanlage mittels einer einzigen Schmieranlage versorgt werden. Hierzu ist es denkbar, dass alle Schmierstellen mit Schmiermittel aus nur einem Schmiermittelreservoir über lediglich eine Schmiermittelfördereinrichtung versorgt werden, oder aber entsprechend der Betriebs- und Schmiermittelerfordernisse mittels unterschiedlichen Schmiermitteln aus voneinander verschiedenen Schmiermittelreservoiren durch unterschiedliche Schmiermittelfördereinrichtungen. In jedem Fall jedoch ist es möglich, alle in einer Windkraftanlage mit Schmiermittel zu versehenden Schmierstellen über nur eine Schmieranlage zu versorgen und damit die Installations-, Wartungs- sowie Betriebskosten signifikant zu reduzieren.

Die Erfindung wird im Folgenden auch hinsichtlich weiterer Merkmale und Vorteile anhand weiterer Ausführungsbeispiele weitgehend erläutert. Dabei wird auch auf die nachfolgenden Zeichnungen Bezug genommen, in welchen folgende Vorrichtungen dargestellt sind:
- Fig. 1: Darstellung einer typischen Windkraftanlage, deren Bestandteile typische Drehbewegungen ausführen können, welche durch Ringpfeile angedeutet sind;
- Fig. 2: Schnittansicht des Gondelbereichs einer Windkraftanlage, in welchem eine Schmieranlage zum Schmieren der Pitcheinstellvorrichtungen vorgesehen ist;
- Fig. 3: Gondelbereich der Windkraftanlage im Wesentlichen gemäß Fig. 2, wohingegen das Schmiermittelreservoir und die Schmiermittelfördereinrichtung der Schmieranlage in einem nahe der Gondel befindlichen Bereich des Mastes angeordnet ist;
- Fig. 4: Schematische Darstellung einer Schmieranlage mit Kolbenpumpe und Progressiv-Verteiler, welche die Schmierung von im Gondelbereich und im Rotor befindlicher Schmierstellen erlaubt.
- Fig. 5: Darstellung einer Schmieranlage entsprechend der in Fig. 4 gezeigten Schmieranlage, wohingegen jedoch die Pitchschmierstellen der Pitcheinstellvorrichtungen im Rotor der Windkraftanlage mittels einer Pneumatikpumpe vorgenommen wird;
- Fig. 6: Darstellung einer Schmieranlage gemäß der Schmieranlage aus Fig. 5, wobei jedoch weitere Schmierstellen der Pitcheinstellvorrichtungen des Rotors mittels einer Kolbenpumpe mit Schmiermittel versorgt werden;
- Fig. 7: Detailskizze einer Ausführungsform der Schmieranlage zur Schmierung der Pitcheinstellvorrichtungen eines Rotors;
- Fig. 8: Schaltbild eines Einleitungssystems einer Schmieranlage;
- Fig. 9: Skizze eines Längsschnittes entlang der Längsachse der Rotorwelle der Windkraftanlage, an deren Ende eine Drehdurchführung angebracht ist.

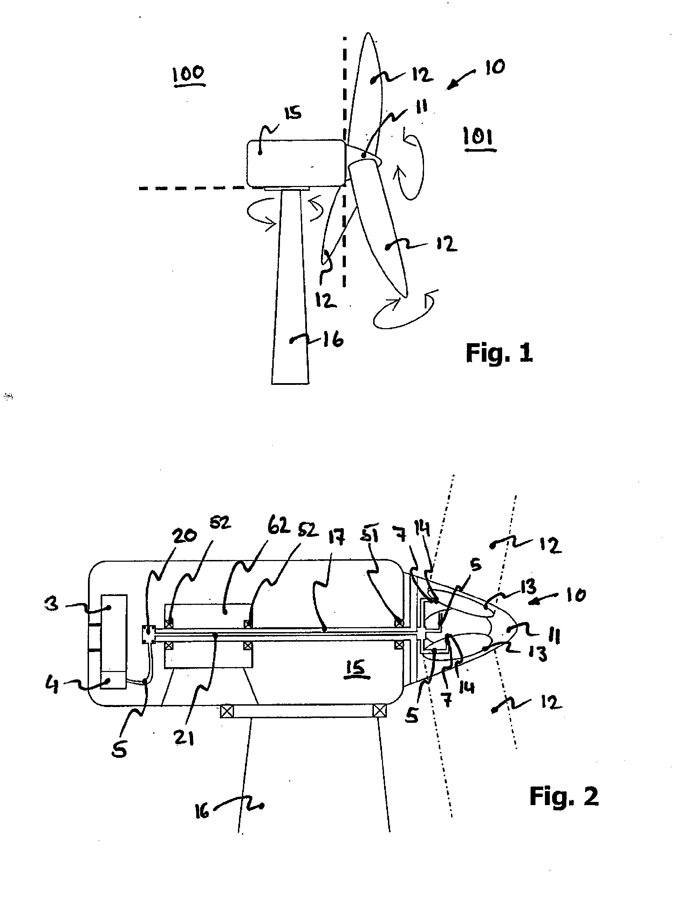

Fig. 1 stellt eine typische Windkraftanlage dar, welche als Bestandteil eine Gondel 15, einen Mast 16, einen Rotor 11 sowie entsprechend an dem Rotor angeordnete Rotorenblätter 12 umfasst. Der Rotor führt im Betriebszustand in Bezug auf die Gondel 15 eine typische Drehbewegung aus, welche durch einen im rechten Teilbereich der Zeichnung dargestellten zyklischen Doppelpfeil dargestellt ist. Diese Drehbewegung definiert beispielsweise ein zweites Bezugssystem 101, welches sich um die Rotorendrehachse bezüglich eines ersten Bezugssystems 100, welches durch die Gondel 15 definiert wird, dreht. Weitere Bezugssystem könnten beispielsweise auch durch die Drehung der Rotorenblätter 12 in Bezug auf die Rotorenachse bzw. Rotorendrehachse, definiert werden. Ein weiteres Bezugssystem ließe sich ferner definieren aufgrund der Drehung der Gondel 15 um den Mast 16. Sowohl die Drehung der Rotorenblätter 12 als auch die Drehung der Gondel 15 um den Mast 16 sind jeweils durch einen entsprechenden perspektivischen Doppelpfeil angedeutet. Die grundlegende Problemstellung der vorliegenden Erfindung betrifft die Anordnung einer Schmieranlage zum Schmieren einer oder mehrerer Schmierstellen, etwa der Schmierstellen der Pitcheinstellvorrichtungen im Rotor 11, wobei die zur Förderung des Schmiermittels vorgesehene Schmiermittelfördereinrichtung beispielsweise in der Gondel 15, und damit in einem anderen drehenden Bezugssystem als dem des Rotors, vorgesehen ist. Erfindungsgemäß sieht die vorliegende Schmieranlage eine hier nicht weiter dargestellte Drehdurchführung vor, welche einer im ersten Bezugssystem 100 angeordneten Schmiermittelfördereinrichtung es im Betrieb der Windkraftanlage ermöglicht, Schmiermittel ungehindert in das sich drehende zweite Bezugssystem 101 zu fördern und den im Rotor angeordneten Schmierstellen zuzuführen. Alternativ ist jedoch auch denkbar, dass aus jedem in der Zeichnung durch einen zyklischen Doppelpfeil dargestellten drehenden Bezugssystem in ein dazu anderes drehendes Bezugssystem eine solche Schmiermittelzuführung erfolgen könnte.

Fig. 2 stellt eine Schnittansicht durch den Gondelbereich der Windkraftanlage 10 dar, wie er beispielsweise in dem Gondelbereich der in Fig. 1 dargestellten Windkraftanlage vorgesehen sein könnte. Die Gondel 15 weist einen Generator 62 auf, welcher über die Generatorlagerungen 52 die Rotorwelle 17 lagert. Die Rotorhauptlagerung 51 ist am rechten Seitenbereich der Gondel 15 vorgesehen, in welchen über eine hier nicht weiter bezeichnete Öffnung die Rotorwelle 17 in die Gondel 15 reicht. Die Rotorwelle 17 ihrerseits ist mit dem Rotor 11 fest verbunden, so dass im Betriebszustand der Windkraftanlage durch Drehung des Rotors 11 ein Drehmoment vom Rotor auf die Rotorwelle zum Generator 62 übertragen werden kann, welches in Folge zur Stromerzeugung genutzt werden kann. Im Rotor 11 sind zudem drei Pitcheinstellvorrichtungen 13 vorgesehen, welche erlauben, den Anstellwinkel der Rotorenblätter 12 (nur schematisch dargestellt) einzustellen. Typischerweise umfasst die Pitcheinstellvorrichtung 13 einen Pitchantrieb 13a und eine Pitchlagerung 13b, welche jedoch beide vorliegend nicht im Detail gezeigt sind. Zur Schmierung der Pitcheinstellvorrichtung 13 sind jeweils eine Schmiermittelzuführung vorgesehen, welche zu jeweils vorbestimmten Schmierstellen 14 Schmiermittel befördern. Die Schmiermittelversorgung erfolgt über den Durchführungskanal für Schmierstoffe 21 entlang der Längsrichtung der Rotorwelle 17, welcher beide Endseiten der Rotorwelle 17 offen verbindet. An der rotorseitigen Endseite befindet sich im hier nicht bezeichneten zweiten Bezugssystem 101 des Rotors 11 die drei Schmiermittelzuführungen 5, welche mit dem Durchführungskanal 21 der Rotorwelle 17 in Verbindung stehen. Die Zuführung von Schmiermittel wird durch die Schmiermittelfördereinrichtung 4 bewirkt, welche Schmiermittel aus dem Schmiermittelreservoir 3 zunächst in eine Schmiermittelzuführung 5 führt, welche an die Drehdurchführung 20 fluiddicht angeschlossen ist. Die Drehdurchführung 20 ihrerseits ist auf der dem Rotor abgewandten Seite der Rotorwelle endseitig mit der Rotorwelle 17 verbunden, so dass das Schmiermittel aus der Schmiermittelzuführung 5 über die Drehdurchführung 20 direkt in den Durchführungskanal 21 der Rotorwelle 17 gefördert wird, von wo aus das Schmiermittel auf die drei im Rotor 11 angeordneten Schmiermittelzuführungen 5 aufgeteilt wird und über den Schmierstellen 14 zugeordnete Austrittsöffnungen 7 austritt und auf die Schmierstellen 14 aufgebracht wird.

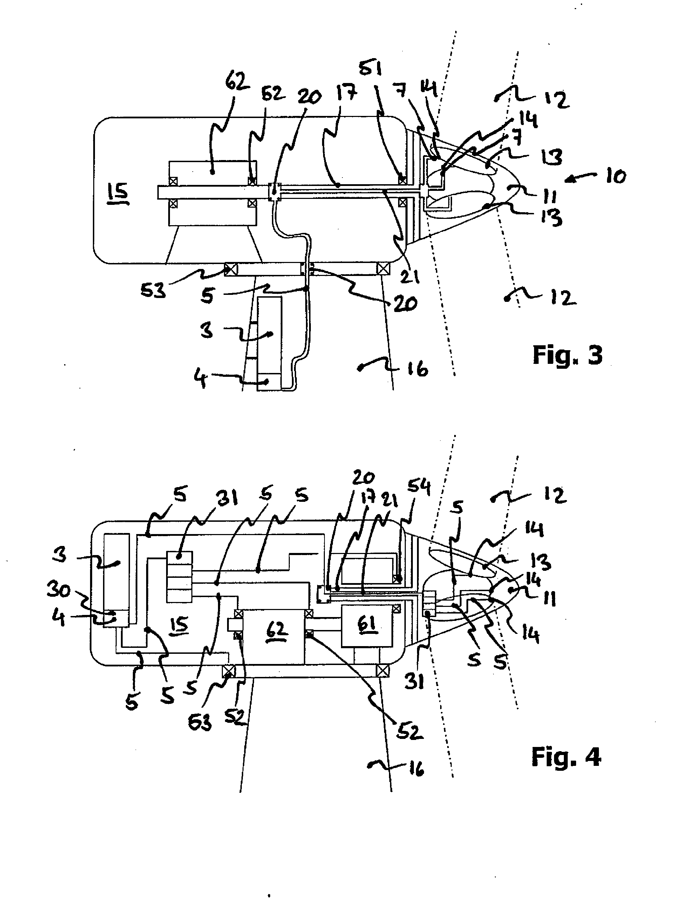

Fig. 3 zeigt eine weitere Ausführungsform der erfindungsgemäßen Schmieranlage in einer Schnittansicht, wobei das das Schmiermittel umfassende Schmiermittelreservoir 3 sowie die Schmiermittelfördereinrichtung 4 nicht in der Gondel 15 der Windkraftanlage 10, sondern im Inneren des Mastes 16 angeordnet sind. Da die Gondel 15 über eine Azimutlagerung 53 zusammen mit einem hier nicht weiter dargestellten Azimutantrieb 55 mit dem Mast 16 drehbar verbunden ist, ist eine Schmiermittelzuführung aus dem Bezugssystem des Mastes 16 in das Bezugssystem der Gondel 15 lediglich wieder über eine Drehdurchführung 20 möglich. Diese ist vorliegend axialsymmetrisch zu dem Azimutlager 53 vorgesehen. Mittels der Schmiermittelfördereinrichtung 4 kann somit unbeeinträchtigt auch bei Drehung der Gondel 15 gegen den Mast über die Schmiermittelzuführung 5 Schmiermittel aus dem Schmiermittelreservoir 3 zur Drehdurchführung 20 befördert werden. Im Gegensatz zur Ausführungsform gemäß Fig. 2 ist vorliegende Drehdurchführung nicht endseitig an der Rotorwelle 17 angebracht, sondern befindet sich ungefähr mittig in die Rotorwelle 17 integriert. Entsprechend dieser Anordnung muss lediglich im zur Drehdurchführung 20 rechts angeordneten Teilbereich der Rotorwelle 17 ein Durchführungskanal 21 vorgesehen sein, über welchen das Schmiermittel aus der Drehdurchführung 20 zu den den Pitcheinstellvorrichtungen 13 des Rotors zugeordneten Schmierstellen 14 befördert werden kann. Die weiteren Funktionsabläufe in der in Fig. 3 dargestellten Windkraftanlage 10 entsprechen im Detail denen der Windkraftanlage 10 aus Fig. 2. Insbesondere sind die Lagerung der Rotorwelle mittels Rotorhauptlager 51, als auch mittels der Generatorlagerung 52, sowie die Stromerzeugung mit Hilfe des Generators 62 bei Betrieb der Windkraftanlage 10 mit der aus Fig. 2 identisch.

Fig. 4 zeigt eine Schnittansicht einer weiteren Ausführungsform der erfindungsgemäßen Schmieranlage 1, deren Anordnung wie die der Schmieranlage aus Fig. 2, lediglich auf die Gondel 15 sowie den Rotor 11 beschränkt ist. Anders als in den Darstellungen der Fig. 2 sowie Fig. 3 jedoch, sind vorliegend in Fig. 4 die Schmiermittelzuführungen 5 lediglich schematisch als Linien dargestellt. Die vorliegende Schmieranlage umfasst eine Kolbenpumpe 30, welche ein Schmiermittelreservoir 3 sowie eine Schmiermittelfördereinrichtung 4 aufweist. Die Schmiermittelfördereinrichtung 4 führt insgesamt 3 Schmiermittelzuleitungen 5 Schmiermittel zu. Eine Schmiermittelzuleitung dient zur direkten Beförderung von Schmiermitteln an die entsprechenden, hier nicht weiter bezeichneten, Schmierstellen des Azimutagers 53. Eine weitere Schmiermittelzuleitung 5 versorgt einen Progressiv-Verteiler 31 mit Schmiermittel, welcher seinerseits über weitere Schmiermittelzuführungen 5 Schmiermittel an die Generatorlagerungen 52, als auch an die Getriebelagerungen 54 fördert. Sollte die Getriebelagerung 54 nicht mit einer Rotorhauptlagerung 51 übereinstimmen, so könnte zusätzlich noch eine hier nicht dargestellte Schmiermittelzuführung 5 vorgesehen sein, welche vom Progressiv-Verteiler 31 Schmiermittel an die Rotorhauptlagerung 51 führt. Je nach Anzahl der Schmierstellen, welche über die Schmiermittelzuführungen 5, die den Progressiv-Verteiler 31 nachgeschaltet sind, zu versorgen sind, können die Schmiermittelzuführungen 5 auch noch weitere Progressiv-Verteiler 31 aufweisen.

Die Schmiermittelzuführung 5, welche direkt von der Schmiermittelfördereinrichtung 4 der Kolbenpumpe 30 mit Schmiermittel versorgt wird, ist wiederum an eine Drehdurchführung 20 der Rotorwelle 17 angeschlossen und vermag somit dem in der Rotorwelle 17 vorgesehenen Durchführungskanal 21 mit Schmiermittel zu versorgen. Das über den Durchführungskanal 21 in der Rotorwelle 17 in den Rotor 11 beförderte Schmiermittel wird mittels eines weiteren Progressiv-Verteilers 41 auf vorliegend insgesamt drei Schmiermittelzuführungen 5 aufgeteilt. Die dem Progressiv-Verteiler 31 nachgeschalteten Schmiermittelzuführungen 5 befördern, wie in den vorherigen Ausführungsformen der Schmieranlagen, das Schmiermittel wiederum an die Schmierstellen 14 der Pitcheinstellvorrichtungen 13.

Ebenso anders als in den Ausführungsformen der vorhergehenden Fig. 2 und 3 weist die Windkraftanlage 10 in Fig. 4 sowohl ein Getriebe 61 als auch einen mit dem Getriebe 61 verbundenen Generator 62 auf. Die Rotorwelle 17 kann folglich deutlich verkürzt ausgeführt sein, wobei es wie vorliegend gezeigt, vorteilhaft erscheint, die Drehdurchführung 20 mit der Rotorwelle 17 auf der dem Rotor 11 abgewandten Seite endseitig zu verbinden. Die Übertragung des von der Rotorwelle auf das Getriebe wirkende Drehmoment wird vorliegend durch eine weitere zweite, hier nicht weiter bezeichnete Welle, auf den Generator 62 übertragen.

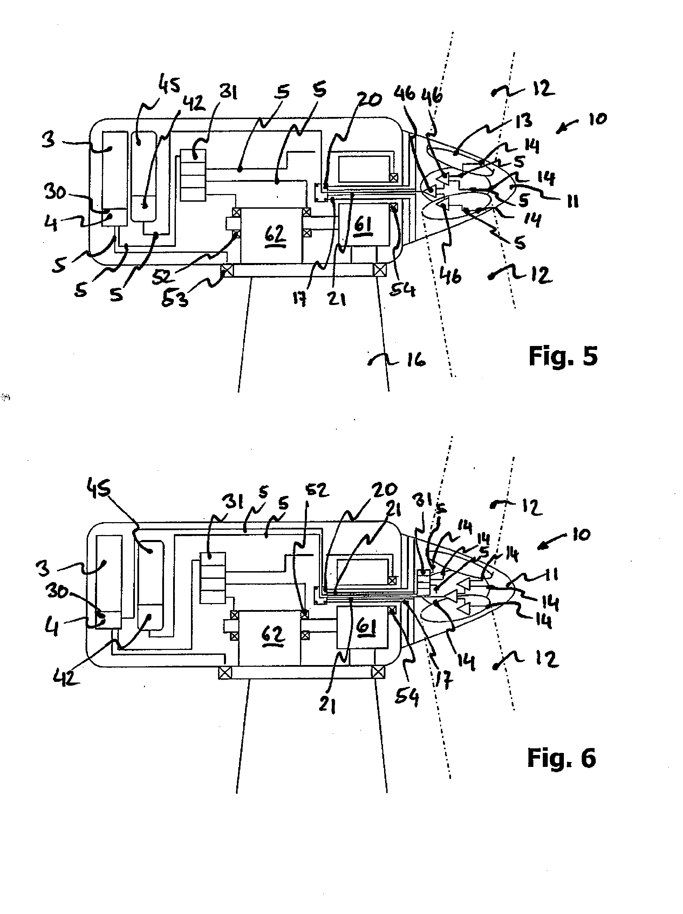

Fig. 5 zeigt eine Schnittansicht der Windkraftanlage gemäß der Ausführungsform der Windkraftanlage in Fig. 4, wohingegen jedoch die Schmierung der Pitcheinstellvorrichtung 13 nicht durch Schmiermittelzuführung aus der Kolbenpumpe 30 erreicht wird, sondern durch Zuführung eines Öl-Luftgemisches aus der Pneumatikpumpe 42, die mit der Druckluftquelle 45 in Wirkverbindung steht. Die Druckluftquelle 45 ist vorliegend lediglich schematisch dargestellt und zeigt nicht explizit ihre Bestandteile wie Kompressor 40 und Druckluftspeicher 41. Ebenso der für die Erzeugung des Öl-Luftgemisches verantwortliche Mischverteiler 43, welcher in einer Ausführungsform auch in der Pneumatikpumpe 42 integriert sein kann, ist vorliegend nicht explizit dargestellt. Das aus dem Mischverteiler 43 austretende Öl-Luftgemisch wird über eine Schmiermittelzuführung 5 über die Drehdurchführung 20 am Ende der Rotorwelle 17 durch den Durchführungskanal 21 der Rotorwelle 17 in den Rotor 11 befördert. Die Verteilung des Öl-Luftgemisches im Rotor 11 erfolgt vorliegend über drei Verteilereinheiten 46, die das Schmiermittel auf insgesamt drei verschiedene Schmiermittelzuführungen 5 aufteilen. Über vorliegend nicht weiter gezeigte Sprühdüsen 44 wird das Öl-Luftgemisch direkt auf die Schmierstellen 14 aufgetragen. Im Gegensatz zur Schmierung der Pitcheinstellvorrichtungen 13 mit einem Öl-Luftgemisch, werden die anderen Schmierstellen der Generatorlagerung 52 sowie der Getriebelagerung 54, als auch der Azimutlager 53 aus einer Kolbenpumpe 30 mit Schmierstoff versorgt.

Fig. 6 zeigt eine Schnittansicht der Windkraftanlage 10 entsprechend der vorhergehenden Windkraftanlage in Fig. 5, jedoch werden weitere Schmierstellen 14 im Rotor 11 mittels Schmierstoff aus der Kolbenpumpe 30 versorgt. Die Kolbenpumpe 30 umfasst das Schmiermittelreservoir 3 sowie die Schmiermittelfördereinrichtung 4, mittels welcher über eine dritte Schmiermittelzuführung 5 Schmiermittel an die Drehdurchführung 20 gefördert wird. Die vorliegend gezeigte Drehdurchführung ist ausgebildet, um zwei Arten von Schmiermitteln unvermischt weiter zu leiten. Die Drehdurchführung 20 ist wiederum auf der dem Rotor 11 abgewandten Seite der Rotorwelle 17 endseitig angebracht. Die Rotorwelle 17 ihrerseits weist zwei Durchführungskanäle 21 auf, die mit der Drehdurchführung 20 derart verbunden sind, dass eine fluiddichte Schmiermittelförderung aus der Drehdurchführung in die beiden Durchführungskanäle 21 der Rotorwelle 17 erfolgen kann. Das Öl-Luftgemisch des vorliegend wiederum nicht gezeigten Mischverteilers 43 wird im Rotor 11 über drei Verteilereinheiten 46 an die vorbestimmten Schmierstellen 14 gefördert. Das in den Rotor 11 beförderte Schmiermittel aus der Pneumatikpumpe 42 wird vorliegend wieder über einen Progressiv-Verteiler 31 auf insgesamt drei Schmiermittelzuführungen 5 aufgeteilt, und folglich an die Schmierstellen 14 befördert.

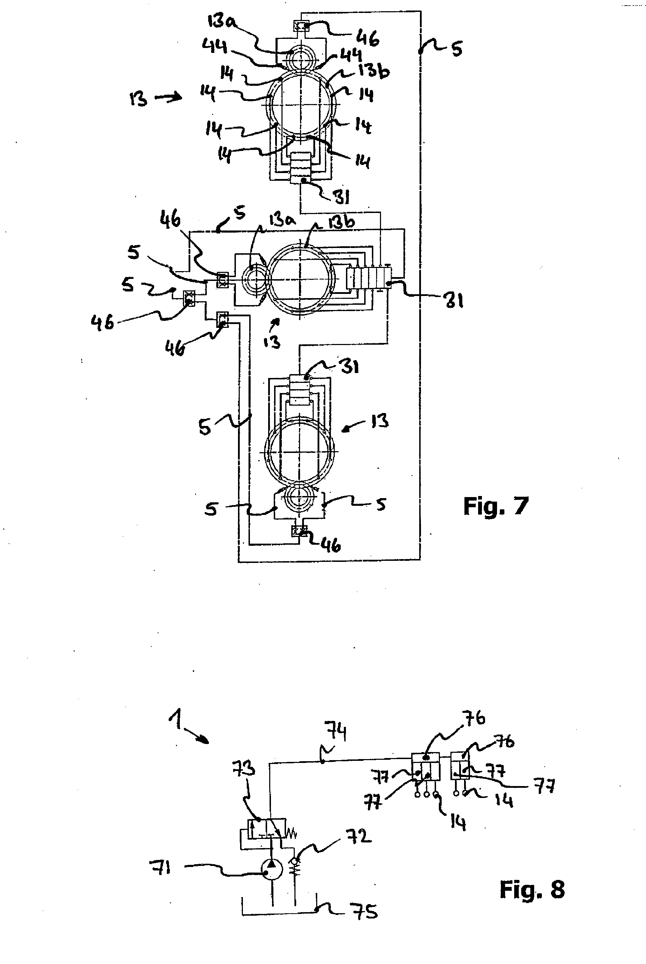

Fig. 7 zeigt eine hydraulische Schaltanordnung, wie sie beispielsweise vorliegen kann zur Schmierung von insgesamt drei Pitcheinstellvorrichtungen 13, umfassend jeweils eine Pitchlagerung 13b und einen Pitchantrieb 13a. Die Schmierung erfolgt vorliegend mittels zweier unterschiedlicher Schmiermittel, beispielsweise einem Schmierfett und einem Öl-Luftgemisch oder einem Schmierfett und einem Fett-Luftgemisch, welche jeweils über die freien Enden (links) der Schmiermittelzuführungen 5 dem vorliegenden System zugeführt werden. Das Schmierfett wird hierbei der Schmiermittelzuführung 5 zugeführt, die mit den der mittleren Pitcheinstellvorrichtung 13 zugeordneten Progressiv-Verteilern 31 verschaltet ist. Der Progressiv-Verteiler 31 teilt seinerseits das zugeführte Schmiermittel wiederum den jeweils nachgeschalteten Progressiv-Verteilern 13 zu, welche der oberen oder der unteren Pitcheinstellvorrichtung 13 zugeordnet sind. Weiterhin teilt der erste Progressiv-Verteiler 31 (der der mittleren Pitcheinstellvorrichtung 13 zugeordnet ist) den Schmierstoff auf weitere acht Schmiermittelzuführungen 5 auf, die Schmierstoff an jeweils acht vorbestimmten Stellen der Pitchlagerung 13 aufbringen. Ebenso weisen die beiden dem ersten Progressiv-Verteiler 31 nachgeschalteten Progressiv-Verteilern 31 jeweils acht Schmiermittelzuführungen 5 auf, die ihrerseits Schmierstoff auf jeweils acht Schmierstellen der Pitchlagerung 13b der oberen Pitcheinstellvorrichtung 13 sowie acht Schmierstellen 14 der Pitchlagerung 13b der unteren Pitcheinstellvorrichtung 13 auftragen.

Das dem im Rotor 11 angeordnete vorliegende Schmiersystem zugeführte Öl-Luftgemisch wird zunächst über drei Verteilereinheiten 46 derart aufgeteilt, dass jeweils eine Schmiermittelzuführung 5 zur Beförderung des Öl-Luftgemisches jeweils einer der Pitcheinstellvorrichtungen 13 zugeordnet wird. Für die oberste sowie die unterste Pitcheinstellvorrichtung 13 sind jeweils wiederum eine zweite Verteilereinheit 46 vorgesehen, welche die Schmiermittelzuführung 5 auf jeweils zwei weitere Schmiermittelzuführungen 5 aufteilt. Die Aufbringung des Öl-Luftgemisches erfolgt jeweils über zwei Sprühdüsen 44 an den Kontaktstellen zwischen Pitchlagerung 13b und Pitchantrieb 13a einer jeden Pitcheinstellvorrichtung 13. Alle Verteilereinheiten 46 sind derart aufeinander abgestimmt, dass eine vergleichbare und gleichmäßige Auftragung des Öl-Luftgemisches auf die Schmierstellen 14 jeder Pitcheinstellvorrichtung 13 erfolgen kann. In gleicher Weise sind die vorliegenden Progressiv-Verteiler 31 derart aufeinander abgestimmt, dass die Auftragung von Schmiermittel auf die vorbestimmten Schmierstellen 14 einer jeden Pitcheinstellvorrichtung 13 gleichmäßig erfolgen kann.

In Fig. 8 ist ein Einleitungssystem einer Schmieranlage 11 veranschaulicht, über welches Schmiermittel (Öle, Fette) aus einem Reservoir 75 an Einleitungsschmierstoffverteiler 76, umfassend ein oder mehrere Verteilerelemente 77, über eine Hauptleitung 74 geliefert wird, um Schmierstellen 14 mit Schmiermittel zu versorgen. Ein solches Einleitungssystem kann vorzugsweise in Verbindung mit der hydraulischen Schaltanordnung gemäß Fig. 7 eingesetzt werden, um Schmiermittel an die Pitchschmierstellen 14' der Windkraftanlage 10 zu liefern. Charakteristisch für ein solches Einleitungssystem ist, dass Schiermittel unter intermittierendem Druck über eine Hauptleitung 74 den Einleitungsschmierstoffverteilern 76, bzw. den Verteilerelementen 77, zugeführt wird. Die Verteilung des Schmiermittels erfolgt dabei an alle Schmierstellen 14 gleichzeitig und dosiert. Eine mögliche Bauform für einen Schmierstoffverteiler 76, umfassend ein oder mehrere Verteilerelemente 77, ist beispielsweise in der DE 20 2007 014 818 offenbart.

Nach Einschalten einer Pumpe 71, welche auch als Kolbenpumpe 30 ausgeführt sein kann, baut sich innerhalb der Hauptleitung 74 ein vorbestimmter Druck auf. Dieser Druck steigt bis zu einem Öffnungs- oder Maximaldruck eines Druckbegrenzungsventils an. Darauf folgend wird die Schmiermittelzufuhr durch die Pumpe 71 abgeschaltet und die Hauptleitung 74 wird beispielsweise über ein Restdruckventil 72 auf einen geringeren Druck entlastet. Der in der Hauptleitung 74 verbleibende Druck ist dabei ausreichend, um ein Entleeren der Hauptleitung 74 zu verhindern. Die Steuerung des Wechsels zum Einsatz des Restdruckventils 72 kann mittels eines Druck- und Entlastungsventils 73 vorgenommen werden, welches das Restdruckventil 72 bei Bedarf zuschaltet und so einen intermittierenden Druckaufbau in der Hauptleitung 74 ermöglicht.

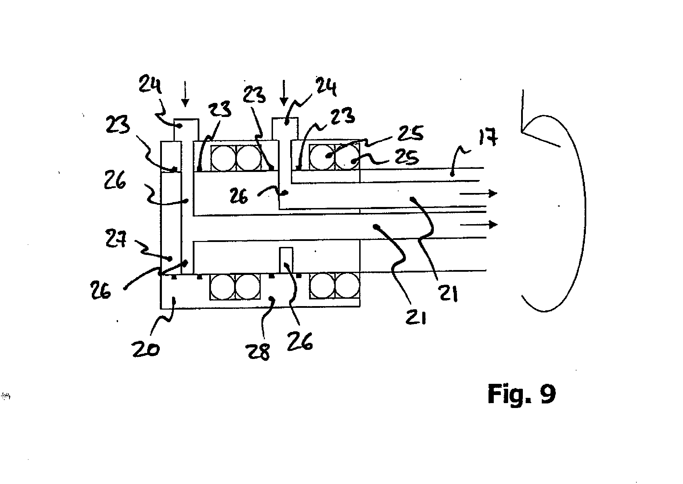

In Fig. 9 ist vorliegend eine Schnittansicht durch eine Drehdurchführung 20 dargestellt, welche mit einer Rotorwelle 17 an dieser endseitig verbunden ist. Die Drehdurchführung 20 umfasst zwei Anschlüsse 24 für die Zuführung von zwei Arten von Schmiermitteln, welche unvermischt in die beiden in der Rotorwelle 17 angeordneten Durchführungskanäle für Schmierstoffe 21 befördert werden können. Die vorliegende Drehdurchführung 20, welche nur schematisch das Funktionsprinzip einer Drehdurchführung erklären soll, umfasst einen Kern 27, welcher in dem Mantel 28 drehbar gelagert ist. Die Lagerung des Kernes 27 in dem Mantel 28 erfolgt über die vorliegend insgesamt vier dargestellten Drehlager 25. Jeder der beiden Anschlüsse 24 ist mit jeweils einem Zuführungskanal 26 des Kernes 27 verbunden. Die Zuführungskanäle 26 im Kern 27 sind derart ausgeführt, dass sie bei Drehung des Kerns 27 im Mantel 28 rotationssymmetrisch erscheinen. Aufgrund dieser Ausfertigung wird auch bei Zuführung von weiterem Schmiermittel über die Anschlüsse 24 während der Drehung des Kerns 27, welcher mit der Rotorwelle 17 fest und fluiddicht verbunden ist, weiteres Schmiermittel in die Durchführungskanäle 21 für den Schmierstofftransport zugeführt. Um eine fluiddichte Abdichtung der rotationssymmetrischen Zuführkanäle 26 des Kernes 27 gegen den Mantel 28 erreichen, sind die Dichtungen 23 - insgesamt vier - vorgesehen. Die Dichtungen 23, welche als Ringdichtungen ausgeführt sind, sind vorliegend in dem Mantel 28 jeweils rechts und links in Nähe der Zuführungskanäle 26 vorgesehen. Damit wird ein Austreten von Schmiermittel aus dem Zuführungskanal 26 in Räume zwischen dem Kern 27 und dem Mantel 28 vermieden, und das in die Anschlüsse 24 zugeführte Schmiermittel wird ausnahmslos in die Durchführungskanäle 21 befördert.

### Bezugszeichenliste:

- 1: Schmieranlage

- 3: Schmiermittelreservoir
- 4: Schmiermittelfördereinrichtung
- 5: Schmiermittelzuführung
- 6: Aufforderungsmittel
- 7: Austrittsöffnung

- 10: Windkraftanlage
- 11: Rotors
- 12: Rotorenblatt
- 13: Pitcheinstellvorrichtung
- 13a: Pitchantrieb
- 13b: Pitchlagerung
- 14: Schmierstelle
- 14': Pitchschmierstelle
- 15: Gondel
- 16: Mast
- 17: Rotorwelle
- 20: Drehdurchführung
- 21: Durchführungskanal für Schmierstoffe
- 22: Durchführungskanal für Leitung
- 23: Dichtung
- 24: Anschluss
- 25: Drehlagerung
- 26: Zuführkanal
- 27: Kern
- 28: Mantel

- 30: Kolbenpumpe
- 31: Progressivverteiler

- 40: Kompressor
- 41: Druckluftspeicher
- 42: Pneumatikpumpe
- 43: Mischverteiler
- 44: Sprühdüse
- 45: Druckluftquelle
- 46: Verteilereinheit

- 51: Rotorhauptlagerung
- 52: Generatorlagerung
- 53: Azimutlagerung
- 54: Getriebelagerung
- 55: Azimutantrieb

- 61: Getriebe
- 62: Generator

- 71: Pumpe
- 72: Restdruckventil
- 73: Druck- und Entlastungsventil
- 74: Hauptleitung
- 75: Reservoir
- 76: Einleitungsschmierstoffverteiler
- 77: Verteilerelement

- 100: Erstes Bezugssystem
- 101: Zweites Bezugssystem

## Patentansprüche

1. Schmieranlage zum Schmieren einer oder mehrerer Schmierstellen (14) in einer Windkraftanlage (10), umfassend:
wenigstens ein Schmiermittelreservoir (3),
wenigstens eine Schmiermittelfördereinrichtung (4),
wenigstens eine Schmiermittelzuführung (5), welche Schmierstoff an
wenigstens eine Schmierstelle (14) führt,
wobei Schmierstoff aus dem wenigstens einem Schmiermittelreservoir (3) durch die wenigstens eine Schmiermittelfördereinrichtung (4) über die mit der wenigstens einen Schmiermittelfördereinrichtung (4) verbundene wenigstens eine Schmiermittelzuführung (5) an die wenigstens eine Schmierstelle (14) gefördert wird,
**dadurch gekennzeichnet, dass**
die wenigstens eine Schmierstelle (14) in einem gegenüber einem ersten Bezugssystem (100) der Schmiermittelfördereinrichtung (4) im Betrieb der Windkraftanlage drehenden zweiten Bezugssystem (101) angeordnet ist, und dass die von der Schmiermittelfördereinrichtung (4) an die Schmierstelle (14) führende Schmiermittelzuführung (5) eine Drehdurchführung (20) umfasst,
wobei wenigstens eine Drehdurchführung (20) einer Rotorwelle (17) der Windkraftanlage (10) vorgesehen ist, durch welche wenigstens ein Schmierstoff geführt wird.

2. Schmieranlage nach Anspruch 1,
**dadurch gekennzeichnet, das s**
das Schmiermittelreservoir (3) im gleichen ersten Bezugssystem (100) wie die Schmiermittelfördereinrichtung (4) angeordnet ist, also sich während des Betriebs der Windkraftanlage nicht relativ zur Schmiermittelfördereinrichtung (4) dreht.

3. Schmieranlage nach einem der Ansprüche 1 oder 2,
**dadurch gekennzeichnet, dass**
das Schmiermittelreservoir (3) und/oder die Schmiermittelfördereinrichtung (4) im Fußbereich der Windkraftanlage gegenüber einem Fundament der Windkraftanlage feststehend angeordnet sind/ist und eine Schmiermittelzuführung (5) vorgesehen ist, die mittels einer Drehdurchführung (20) Schmierstoff an eine oder mehrere Schmierstellen (14) eines Azimutlagers (53) und/oder eines Azimutantriebs (55) der Windkraftanlage (10) führt.

4. Schmieranlage nach einem der Ansprüche 1 bis 3,
**dadurch gekennzeichnet, dass**
das Schmiermittelreservoir (3) und/oder die Schmiermittelfördereinerichtung (4) in einem Mast (16) und/oder in einer Gondel (15) der Windkraftanlage (10) angeordnet sind/ist und wenigstens eine Schmiermittelzuführung (5) vorgesehen ist, die Schmierstoff an eine oder mehrere Schmierstellen (14) eines Azimutlagers (53) der Windkraftanlage führt.

5. Schmieranlage nach einem der Ansprüche 1 bis 4,
**dadurch gekennzeichnet, dass**
wenigstens eine Schmierstelle (14) als Pitchschmierstelle (14') zur Schmierung einer Pitcheinstellvorrichtung (13) der Windkraftanlage (10) ausgebildet ist.

6. Schmieranlage nach Anspruch 5,
**dadurch gekennzeichnet, das s**
innerhalb der Pitcheinstellvorrichtung (13) Pitchschmierstellen (14') zur Schmierung eines Pitchantriebs (13a) und/oder einer Pitchlagerung (13b) ausgebildet sind.

7. Schmieranlage nach Anspruch einem der Ansprüche 1 bis 6,
**dadurch gekennzeichnet, dass**
die wenigstens eine Drehdurchführung (20) an der Rotorwelle (17) oder an einer beliebigen Stelle entlang der Längserstreckung der Rotorwelle (17) in die Rotorwelle (17) integriert endseitig vorgesehen ist.

8. Schmieranlage nach einem der Ansprüche 6 oder 7,
**dadurch gekennzeichnet, dass**
die wenigstens eine Drehdurchführung (20) in der Rotorwelle (17) korrosionsbeständiges Material aufweist und/oder gegen Überdruck des Schmierstoffs bis zu wenigstens 300 bar dicht ist und/oder wenigstens zwei getrennte Durchführungskanäle (21) aufweist, so dass zwei unterschiedliche Schmiermittel zuführbar sind.

9. Schmieranlage nach einem der Ansprüche 1 bis 8,
**dadurch gekennzeichnet, dass**
die Schmieranlage zur Förderung wenigstens zweier unterschiedlicher Schmiermittel, vorzugsweise einem auf Schmierfett basierenden und einem auf einem Öl-Luftgemisch basierenden Schmiermittel, ausgebildet ist:

10. Schmieranlage nach einem der Ansprüche 1 bis 9,
**dadurch gekennzeichnet, dass**
die wenigstens eine Schmiermittelfördereinrichtung (4) eine elektrische Kolbenpumpe (30) umfasst, welche die Förderung von Schmiermittel auf mechanische Weise aus dem wenigstens einen Schmiermittelreservoir (3) in die wenigstens eine Schmiermittelzuführung (5) bewirkt.

11. Schmieranlage nach Anspruch 10,
**dadurch gekennzeichnet, dass**
die wenigstens eine Schmiermittelzuführung (5) wenigstens einen Progressiwerteiler (31) umfasst.

12. Schmieranlage nach Anspruch 11,
**dadurch gekennzeichnet, dass**
jedem der wenigstens einen Pitchantriebe (13a) und/oder wenigstens einem Pitchlager (13b) der Pitcheinstellvorrichtungen (13) jeweils ein separater oder ein gemeinsamer Progressiwerteiler (31) zugeordnet ist.

13. Schmieranlage nach einem der Ansprüche 1 bis 9,
**dadurch gekennzeichnet, das s**
die wenigstens eine Schmiermittelfördereinrichtung (4) eine Druckluftquelle (45) aufweist, welche mit einer Pneumatikpumpe (42) kommuniziert, die ihrerseits mit Druckluft vermischtes Schmiermittel an einen Mischverteiler (43) fördert, in welchem die Zerstäubung des Schmiermittels mit Druckluft und die Beförderung des zerstäubten Schmiermittels an die wenigstens eine Schmiermittelzuführung (5) erfolgt.

14. Schmieranlage nach einem der Ansprüche 9 bis 13,
**dadurch gekennzeichnet, dass**
jeder der wenigstens einen Pitchantriebe (13a) der Pitcheinstellvorrichtung (13) wenigsten eine Sprühdüse (44) zugeordnet ist und mit dem wenigstens einen auf einem Öl-Luftgemisch basierenden Schmiermittel geschmiert wird und/oder jeder Pitchlagerung (13b) wenigstens eine Austrittsöffnung (7) der Schmiermittelzuführung (5) zugeordnet ist und mit dem wenigstens einen auf Schmierfett basierenden Schmiermittel geschmiert werden.

15. Schmieranlage nach einem der Ansprüche 1 bis 14,
**dadurch gekennzeichnet, dass**
Schmierstoff über die wenigstens eine Schmiermittelzuführung (5) an wenigstens eine weitere Schmierstelle (14) einer Rotorhauptlagerung (51) und/oder einer Generatorlagerung (52) und/oder einer Getriebelagerung (54) der Windkraftanlage (10) gefördert wird.

## Claims

1. A lubrication system for lubricating one or more lubricating points (14) in a wind turbine (10), comprising:
at least one lubricant reservoir (3),
at least one lubricant conveying means (4),
at least one lubricant feed (5) which conveys lubricant to at least one
lubricating point (14),
wherein lubricant is conveyed from the at least one lubricant reservoir (3) through the at least one lubricant conveying means (4) via the at least one lubricant feed (5), which is connected to the at least one lubricant conveying means (4), to the at least one lubricating point (14),
**characterized in that**
the at least one lubricating point (14) is disposed in a second reference system (101) rotating with respect to a first reference system (100) of the lubricant conveying means (4) during operation of the wind turbine, and that the lubricant feed (5) leading from the lubricant conveying means (4) to the lubricating point (14) comprises a rotary feedthrough (20),
wherein at least one rotary feedthrough (20) of a rotor shaft (17) of the wind turbine (10) is provided through which at least one lubricant is lead.

2. The lubrication system according to claim 1,
**characterized in that**
the lubricant reservoir (3) is disposed in the same reference system (100) as the lubricant conveying means (4), thus does not rotate relative to the lubricant conveying means (4) during operation of the wind turbine.

3. The lubrication system according to claim 1 or 2,
**characterized in that**
the lubricant reservoir (3) and/or the lubricant conveying means (4) is/are disposed in the base portion of the wind turbine fixed with respect to a foundation of the wind turbine, and a lubricant feed (5) is provided which conveys lubricant by means of a rotary feedthrough (20) to one or more lubricating points (14) of an azimuth bearing (53) and/or an azimuth drive (55) of the wind turbine (10).

4. The lubrication system according to any one of claims 1 to 3,
**characterized in that**
the lubricant reservoir (3) and/or the lubricant conveying means (4) is/are disposed in a mast (16) and/or in a nacelle (15) of the wind turbine (10), and at least one lubricant feed (5) is provided which conveys lubricant to one or more lubricating points (14) of an azimuth bearing (53) of the wind turbine.

5. The lubrication system according to any one of claims 1 to 4,
**characterized in that**
at least one lubricating point (14) is formed as a pitch lubricating point (14') for lubricating a pitch adjustment device (13) of the wind turbine (10).

6. The lubrication system according to claim 5,
**characterized in that**
pitch lubricating points (14') are formed within the pitch adjustment device (13) for lubricating a pitch drive (13a) and/or a pitch bearing (13b).

7. The lubrication system according to any one of claims 1 to 6,
**characterized in that**
the at least one rotary feedthrough (20) is provided at the rotor shaft (17) or at any location along the longitudinal extension of the rotor shaft (17) to be integrated in the rotor shaft (17) at the end thereof.

8. The lubrication system according to any one of claims 6 or 7,
**characterized in that**
the at least one feedthrough (20) in the rotor shaft (17) exhibits a corrosionresistant material and/is tight against overpressure of the lubricant up to at least 300 bar and/or exhibits at least two separated feedthrough channels (21) so that two different lubricants can be fed.

9. The lubrication system according to any one of claims 1 to 8,
**characterized in that**
the lubrication system is configured to convey at least two different lubricants, preferably one lubricant which is based on lubricating grease and one lubricant which is based on an oil-air mixture.

10. The lubrication system according to any one of claims 1 to 9,
**characterized in that**
the at least one lubricant conveying means (4) comprises an electric piston pump (30) which causes lubricant to be supplied in a mechanical manner from the at least one lubricant reservoir (3) into the at least one lubricant feed (5).

11. The lubrication system according to claim 10,
**characterized in that**
the at least one lubricant feed (5) comprises at least one progressive distributor (31).

12. The lubrication system according to claim 11,
**characterized in that**
each of the at least one pitch drives (13a) and/or at least one pitch bearing (13b) of the pitch adjustment devices (13) each has a separate or a common progressive distributor (31) assigned thereto.

13. The lubrication system according to any one of claims 1 to 9,
**characterized in that**
the at least one lubricant conveying means (4) exhibits a source of pressurized air (45) which communicates with a pneumatic pump (42) which for its part conveys lubricant mixed with pressurized air to a mixing distributor (42) in which the atomization of the lubricant including pressurized air and the conveyance of the atomized lubricant to the at least one lubricant feed (5) is performed.

14. The lubrication system according to any one of claims 9 to 13,
**characterized in that**
each of the at least one pitch drives (13a) of the pitch adjustment device (13) has at least one spray nozzle (44) assigned thereto and is lubricated with the at least one lubricant which is based on an oil-air mixture and /or each pitch bearing (13b) has at least one outlet opening (7) of the lubricant feed (5) assigned thereto and is lubricated with the at least one lubricant which is based on lubricating grease.

15. The lubrication system according to any one of claims 1 to 14,
**characterized in that**
lubricant is conveyed via the at least one lubricant feed (5) to at least one further lubricating point (14) of a rotor main bearing (51) and/or of a generator bearing (52) and/or of a gearbox bearing (54) of the wind turbine (10).

## Revendications

1. Installation de lubrification destinée à lubrifier un ou plusieurs points de lubrification (14) dans une installation éolienne (10), comprenant :
au moins un réservoir de produit lubrifiant (3),
au moins un dispositif de refoulement de produit lubrifiant (4),
au moins une amenée de produit lubrifiant (5) qui mène du lubrifiant à au moins un point de lubrification (14),
du lubrifiant étant refoulé depuis l'au moins un réservoir de produit lubrifiant (3) par l'au moins un dispositif de refoulement de produit lubrifiant (4) vers l'au moins un point de lubrification (14) via l'au moins une amenée de produit lubrifiant (5) reliée à l'au moins un dispositif de refoulement de produit lubrifiant (4),
**caractérisée en ce que**
l'au moins un point de lubrification (14) est disposé dans un deuxième système de référence (101) tournant par rapport à un premier système de référence (100) du dispositif de refoulement de produit lubrifiant (101) en fonctionnement de l'installation éolienne, et **en ce que** l'amenée de produit lubrifiant (5) menant du dispositif de refoulement de produit lubrifiant (4) au point de lubrification (14) comprend un passage tournant (20),
au moins un passage tournant (20) d'un arbre de rotor (17) de l'installation éolienne (10) par lequel au moins un lubrifiant est mené étant prévu.

2. Installation de lubrification selon la revendication 1,
**caractérisée en ce que**
le réservoir de produit lubrifiant (3) est disposé dans le même système de référence (100) que le dispositif de refoulement de produit lubrifiant (4), et donc ne tourne pas relativement au dispositif de refoulement de produit lubrifiant (4) pendant le fonctionnement de l'installation éolienne.

3. Installation de lubrification selon l'une des revendications 1 ou 2,
**caractérisée en ce que**
le réservoir de produit lubrifiant (3) et/ou le dispositif de refoulement de produit lubrifiant (4) est/sont disposé/s dans la zone du pied de l'installation éolienne de manière fixe par rapport à une fondation de l'installation éolienne et une amenée de produit lubrifiant (5) qui mène du lubrifiant moyennant un passage tournant (20) à un ou plusieurs points de lubrification (14) d'un palier azimut (53) et/ou d'un entraînement azimut (55) de l'installation éolienne (10) est prévue.

4. Installation de lubrification selon l'une des revendications 1 à 3,
**caractérisée en ce que**
le réservoir de produit lubrifiant (3) et/ou le dispositif de refoulement de produit lubrifiant (4) est/sont disposé/s dans un mât (16) et/ou dans une nacelle (15) de l'installation éolienne (10) et au moins une amenée de produit lubrifiant (5) qui mène du lubrifiant à un ou plusieurs points de lubrification (14) d'un palier azimut (53) de l'installation éolienne est prévue.

5. Installation de lubrification selon l'une des revendications 1 à 4,
**caractérisée en ce que**
au moins un point de lubrification (14) est constituée comme point de lubrification de pas (14') pour la lubrification d'un dispositif de réglage de pas (13) de l'installation éolienne (10).

6. Installation de lubrification selon la revendication 5,
**caractérisée en ce que**
des points de lubrification de pas (14') pour la lubrification d'un entraînement de pas (13a) et/ou d'un logement de pas (13b) sont constitués à l'intérieur du dispositif de réglage de pas (13).

7. Installation de lubrification selon l'une des revendications 1 à 6,
**caractérisée en ce que**
l'au moins un passage tournant (20) est prévu au niveau de l'arbre de rotor (17) ou d'un point quelconque le long de l'extension longitudinale de l'arbre de rotor, en extrémité de manière intégrée (17) dans l'arbre de rotor.

8. Installation de lubrification selon l'une des revendications 6 ou 7,
**caractérisée en ce que**
l'au moins un passage tournant (20) dans l'arbre de rotor (17) présente du matériau résistant à la corrosion et/ou est étanche par rapport à une surpression du lubrifiant jusqu'à au moins 300 bars et/ou présente au moins deux canaux de passage (21) séparés de sorte que deux produits lubrifiants différents puissent être amenés.

9. Installation de lubrification selon l'une des revendications 1 à 8,
**caractérisée en ce que**
l'installation de lubrification est constituée pour refouler au moins deux produits lubrifiants différents, de préférence un produit lubrifiant à base de graisse de lubrification et un à base d'un mélange huile-air.

10. Installation de lubrification selon l'une des revendications 1 à 9,
**caractérisée en ce que**
l'au moins un dispositif de refoulement de produit lubrifiant (4) comprend une pompe à piston électrique (30) qui provoque le refoulement de produit lubrifiant de manière mécanique depuis l'au moins un réservoir de produit lubrifiant (3) vers l'au moins une amenée de produit lubrifiant (5).

11. Installation de lubrification selon la revendication 10,
**caractérisée en ce que**
l'au moins une amenée de produit lubrifiant (5) comprend au moins un distributeur progressif (31).

12. Installation de lubrification selon la revendication 11,
**caractérisée en ce que**
un distributeur progressif (31) distinct ou commun est affecté respectivement à chacun des au moins un entraînements de pas (13a) et/ou des au moins un paliers de pas (13a) des dispositifs de réglage de pas (13).

13. Installation de lubrification selon l'une des revendications 1 à 9,
**caractérisée en ce que**
l'au moins un dispositif de refoulement de produit lubrifiant (4) présente une source d'air comprimé (45) qui communique avec une pompe pneumatique (42), laquelle refoule quant à elle du produit lubrifiant mélangé à de l'air comprimé vers un distributeur de mélange (43) dans lequel s'effectuent la vaporisation du produit lubrifiant avec de l'air comprimé et l'acheminement du produit lubrifiant vaporisé vers l'au moins une amenée de produit lubrifiant (5).

14. Installation de lubrification selon l'une des revendications 9 à 13,
**caractérisée en ce que**
au moins une tuyère de pulvérisation (44) est affectée à chacun des au moins un entraînements de pas (13a) du dispositif de réglage de pas (13) et une lubrification s'effectue avec l'au moins un produit lubrifiant à base d'un mélange huile-air et/ou au moins un orifice de sortie (7) de l'amenée de produit lubrifiant (5) est affecté à chaque logement de pas (13b) et une lubrification s'effectue avec l'au moins un produit lubrifiant à base de graisse de lubrification.

15. Installation de lubrification selon l'une des revendications 1 à 14,
**caractérisée en ce que**
du lubrifiant est refoulé via l'au moins une amenée de produit lubrifiant (5) vers au moins un point de lubrification (14) supplémentaire d'un logement principal de rotor (51) et/ou d'un logement de générateur (52) et/ou d'un logement d'engrenage (54) de l'installation éolienne (10).
